# EUROPÄISCHE PATENTSCHRIFT

(11) **EP 3 796 271 B1**
(45) Veröffentlichungstag und Bekanntmachung des Hinweises auf die Patenterteilung: **08.11.2023**
(21) Anmeldenummer: 19198492.1
(22) Anmeldetag: 19.09.2019
(51) Int. Cl.: G07C 9/30, B60K 28/02, G05D 1/02

(54) **ERMITTELN VON BERECHTIGUNGEN BEIM ANFAHREN VON ORTEN MIT EINEM AUTONOMEN KRAFTFAHRZEUG**
DETERMINATION OF RIGHTS WHEN APPROACHING LOCATIONS WITH AN AUTONOMOUS MOTOR VEHICLE
DÉTERMINATION DES AUTORISATIONS LORS DU DÉPART À PARTIR DE LIEUX AVEC UN VÉHICULE AUTOMOBILE AUTONOME

(43) Veröffentlichungstag der Anmeldung: 24.03.2021
(73) Patentinhaber: Volkswagen AG, 38440 Wolfsburg (DE)
(72) Erfinder: Schöning, Volkmar, 30900 Wedemark (DE); Hüsemann, Frank, 38162 Cremlingen (DE)

(56) Entgegenhaltungen:
- DE-A1-102016 116 910
- DE-A1-102017 202 834
- JP-A- 2002 039 762

## Beschreibung

Die Erfindung betrifft ein Verfahren und eine Steuereinrichtung zum Betreiben eines autonom betreibbaren Kraftfahrzeugs. Autonom betreibbare Kraftfahrzeuge können auch als autonome oder selbstfahrende Kraftfahrzeuge bezeichnet werden. Sie können in an sich bekannter Weise fahrerautonom bzw. ohne kontinuierliche oder fortlaufende Fahrereingriffe selbständig fahren. Bei dem Kraftfahrzeug kann es sich insbesondere um einen Personenkraftwagen oder einen Lastkraftwagen handeln.

Es ist bekannt, für autonome Kraftfahrzeuge geografische Zonen oder Orte zu definieren, innerhalb derer diese nur mittels vorbestimmter Betriebsmodi betreibbar sind. Beispielhaft wird auf die US 9,688,288 B1 verwiesen.

Eine solche Definition vorbestimmter Zonen oder Orte hat sich jedoch nicht immer als praxistauglich erwiesen. Beispielsweise sind nur relativ pauschale Vorgaben möglich, welche Orte autonom anfahrbar sind, ohne zusätzliche Differenzierungen vornehmen zu können.

Die DE 10 2017 202 834 A1 offenbart das Betreiben eines Kraftfahrzeugs in einem zumindest teilautonomen Fahrmodus, wobei Berechtigungen von Kraftfahrzeuginsassen überprüft werden und wenn Berechtigungen fehlen, eine solche von einem fahrzeugexternen Berechtigungsgerät abgefragt wird. Insbesondere sollen Erziehungsberechtigte mit dem fahrzeugexternen Berechtigungsgerät Kindern im Kraftfahrzeug eine zumindest teilautonome Fahrt mit dem Kraftfahrzeug ermöglichen.

Die DE 10 2016 116 910 A1 offenbart eine Lösung, um die Anwesenheit nicht berechtigter Insassen oder eines nicht berechtigten Objekts in einem Host-Fahrzeug zu ermitteln und darauf basierend zu bestimmen, ob das Fahrzeug in einem autonomen Modus betrieben wird. Die JP 2002-39762-A betrifft ein Navigationsgerät für ein Fahrzeug, wobei, wenn eine zu vermeidende Gegend nicht umfahren werden kann, die Türen des Fahrzeugs automatisch verriegelt werden, wenn das Fahrzeug in die zu vermeidende Gegend einfährt.

Es besteht deshalb ein Bedarf dafür, den Betrieb autonomer Kraftfahrzeuge zu verbessern, insbesondere hinsichtlich des Ermöglichens eines ortsabhängig autonomen Fahrbetriebs.

Diese Aufgabe wird durch ein Verfahren und durch eine Anordnung mit den Merkmalen der unabhängigen Ansprüche gelöst. Vorteilhafte Weiterbildungen sind in den abhängigen Ansprüchen angegeben.

Allgemein wird vorgeschlagen, neben ortsabhängigen Kriterien auch andere und insbesondere personenbezogene Kriterien von Nutzern eines Kraftfahrzeugs zu berücksichtigen, die darüber entscheiden, ob das autonome Kraftfahrzeug einen Ort anfahren darf oder nicht. Somit besteht eine zusätzliche Differenzierungsmöglichkeit und die Flexibilität des Kraftfahrzeugbetriebs wird erhöht. Beispielsweise kann dann vorgegeben werden, dass bestimmte Orte nur von bestimmten Personen angefahren werden dürfen, andere Orte dafür aber lediglich von anderen Personen. Je nach Ort, der angefahren werden soll, kann personenspezifisch ermittelt werden, ob eine Person hierzu berechtigt ist oder nicht. Dies ermöglicht z.B. das Definieren personenabhängig zugangsbeschränkter Orte oder daraus zusammengesetzter geografischer Bereiche, beispielsweise um die dortige Sicherheit zu verbessern. Mittels der vorliegenden Erfindung kann es aber auch ermöglicht werden, beispielsweise in Notfallsituationen Sicherheitskräften ein Anfahren dieser Bereiche bzw. Orte zu ermöglichen, da diese als berechtigte Personen definiert werden können.

Gemäß anderer Ausführungsformen ist es ebenso möglich, Zugangsberechtigungen in Einzelfällen gesondert zu erteilen, beispielsweise um einen Kraftfahrzeug und/oder Lieferanten das Anliefern von Waren zu einem bestimmten Ort zu ermöglichen, ohne aber dass dieser Ort zum Anfahren durch die Allgemeinheit freigegeben werden muss. Die Zugangsberechtigung kann in diesem Fall waren- oder ladungsspezifisch erteilt werden.

Im Detail schlägt die Erfindung ein Verfahren mit den Merkmalen von Anspruch 1 vor.

Hierin beschrieben ist das Ermitteln, ob das Kraftfahrzeug berechtigt ist, den laut Ortsinformation geplanten Ort anzufahren anhand von wenigstens einem der folgenden:
a) wenigstens einer personenbezogenen Information zu wenigstens einer das Kraftfahrzeug nutzenden Person;
b) einer Anzahl der das Kraftfahrzeug nutzenden Personen;
c) einer Ladungsinformation (oder ladungsbezogenen Information) einer Ladung, die von dem Kraftfahrzeug transportiert wird.

Erfindungsgemäß erfolgt das Ermitteln, ob das Kraftfahrzeug berechtigt ist, den laut Ortsinformation geplanten Ort anzufahren anhand von Variante a) wie in den unabhängigen Ansprüchen spezifiziert.

Das Verfahren kann allgemein computerimplementiert ausgeführt werden, insbesondere mittels der hierin geschilderten Steuereinrichtung. Entsprechend können sämtliche Verfahrensmaßnahmen, allein oder in beliebiger Kombination, automatisch und/oder computerimplementiert ausgeführt werden. Insbesondere die vorstehende Ermittlung kann ein per Algorithmus und/oder Programmanweisung ausgeführter Vorgang sein.

Das Kraftfahrzeug kann z.B. dann berechtigt sein, wenn eine das Kraftfahrzeug nutzende Person oder die hiervon transportierte Ladung zum Anfahren des Ortes berechtig ist.

Bei dem Ermitteln gemäß b) kann insbesondere ermittelt werden, ob die Anzahl wenigstens eins beträgt, d. h. ob überhaupt eine Person in dem Fahrzeug sitzt. Eine solche Ermittlung kann zum Beispiel mittels Sitzsensoren, mittels Innenraumkameras, mittels einer Anwesenheitsermittlung eines personengebundenen Endgeräts (zum Beispiel eines Smartphones) oder dergleichen erfolgen. Auch eine mittelbare Ermittlung anhand eines Öffnens und Schließen von Türen ist möglich.

Entspricht die Anzahl nicht einem vorbestimmten Mindestwert und insbesondere nicht zumindest eins (d. h. befindet sich keine Person in dem Fahrzeug), kann darauf geschlossen werden, dass das Fahrzeug eine nicht gewünschte Anzahl von Personen aufweist und insbesondere unbesetzt ist. Dann kann verhindert werden, dass das Kraftfahrzeug insbesondere unbesetzt den geplanten Ort anfährt. Dies verhindert, dass das Fahrzeug versehentlich oder manipuliert in Richtung des geplanten Orts fährt.

Im Fall der Ermittlung nach b) kann vorgesehen sein, dass sämtliche anfahrbaren Orte des Kraftfahrzeugs nur dann anfahrbar sind, wenn die Anzahl der das Kraftfahrzeug nutzenden Personen wenigstens eins beträgt

Beim Ermitteln gemäß c) kann insbesondere eine Identität, Art und/oder Klasse einer Ladung ermittelt werden. Es kann dann überprüft werden, ob diese Ladung (beziehungsweise diese Art oder Klasse von Ladung) berechtigt ist, zu dem geplanten Ort transportiert zu werden. Es können entsprechend ortsabhängige Berichtigungsinformationen vorliegen oder vorgebbar sein, die definieren, welche Ladung (d. h. welche spezifische Ladung mit einer bestimmten Identität, welche Arten von Ladung und/oder welche Klassen von Ladung) zu diesem Ort transportiert werden dürfen. Es kann überprüft werden, ob das Kraftfahrzeug mit einer entsprechenden Ladung berechtigt ist, den geplanten Ort anzufahren oder nicht.

Die Ladungsinformationen können zum Beispiel durch eine manuelle Eingabe ermittelt und/oder vorgegeben werden, insbesondere wenn die Ladungsinformationen die Identität der Ladung betreffen. Zusätzlich oder alternativ kann die Ladungsinformation zum Beispiel durch Bildauswertealgorithmen ermittelt werden, welche zum Beispiel von Fahrzeugkameras erfasste Bilder der Ladung auswerten (zum Beispiel um eine Größe oder Form festzustellen). Zusätzlich oder alternativ können Gewichtsensoren zum Beispiel im Laderaum des Kraftfahrzeugs Ladungsinformationen liefern. Mittels Bildauswertung und/oder Gewichtssensoren können die Ladungsinformationen die Ladung insbesondere klassifizieren (zum Beispiel nach Gewicht oder Größe) oder einer Art von Ladung zuordnen (zum Beispiel Schüttgut, Pakete, Flüssigkeitsbehälter).

Hierin beschrieben ist ein Verfahren, das ferner folgende Maßnahme umfassen kann:
- dann, wenn die Person und/oder das Kraftfahrzeug nicht berechtigt ist, den Ort anzufahren: Verhindern eines Anfahrens des geplanten Ortes, z.B. durch automatisches Umleiten des Kraftfahrzeugs und/oder automatisches Anhalten des Kraftfahrzeugs und/oder automatisches Ausgeben von Warnsignalen und/oder alternativen Routenvorschlägen für das Kraftfahrzeug.

Das Erhalten der personenbezogenen Informationen und/oder der Ortsinformation und/oder allgemein der Informationen nach a)-c) kann umfassen, dass diese Informationen automatisch angefragt oder, mit anderen Worten, angefordert werden. Alternativ oder zusätzlich können diese Informationen automatisch bzw. fahrerautonom ermittelt werden.

Beispielsweise kann wenigstens eine Personenermittlungseinheit vorgesehen sein, die dazu eingerichtet ist, die personenbezogenen Informationen nach a) zu ermitteln. Hierbei kann es sich um eine Steuereinrichtung des Fahrzeugs handeln und/oder um eine durch die hierin offenbarte Steuereinrichtung bereitgestellte Funktionalität. Die personenbezogenen Informationen können allgemein oder mittels einer solchen Einheit z.B. durch Ermitteln einer identifizierenden Eingabe der Person in eine Eingabeeinrichtung des Kraftfahrzeugs (z.B. ein Touchscreen) oder in ein fahrzeugexternes Gerät (z.B. ein Endgerät, wie ein Smartphone) ermittelt werden. Auch das Mitführen von RFID-Tags durch eine Person und Ermitteln damit codierter personenbezogener Informationen ist möglich. Weiter können personenbezogene Informationen z.B. durch im Innenraum des Kraftfahrzeugs installierte Kameras oder anderweitige Fahrzeugsensoren ermittelt werden. Dann können sich die Informationen z.B. auf das Erkennen von Berufskleidung oder anderweitigen vorbestimmten optischen Merkmalen der Person beziehen.

Zum Ermitteln der Ortsinformationen, was erfindungsgemäß als eine gesonderte Maßnahme ebenso vorgesehen sein kann, kann der geplante Ort des Kraftfahrzeugs mittels eines Navigationssystems des Kraftfahrzeugs ermittelt werden. Dieses kann allgemein dazu eingerichtet sein, eine Routenplanung des Kraftfahrzeugs vorzunehmen, insbesondere eine automatische Routenplanung, z.B. nach Maßgabe von einem gewünschten Ziel.

Allgemein kann es sich bei dem geplanten Ort um einen zukünftig geplanten Ort handeln. Dieser kann z.B. entlang einer ermittelten, vorgegebenen oder allgemein geplanten Fahrstrecke des Kraftfahrzeugs liegen. Bevorzugt handelt es sich um einen Zielort des Kraftfahrzeugs oder um einen Ort, der in der Nähe des Zielorts liegt und z.B. weniger als ein Kilometer hiervon entfernt ist.

Unter dem Anfahren eines geplanten Ortes kann gemäß bevorzugter Ausführungsformen verstanden werden, dass das Kraftfahrzeug diesen Ort als Zielort anvisiert und z.B. dort zumindest temporär anhält. Insbesondere kann an diesem geplanten anzufahrenden Ort ein Aussteigen der Person ermöglicht werden und/oder ein Zusteigen von anderen Personen (beispielsweise durch Deaktivieren einer automatischen Fahrzeugverriegelung). Erfindungsgemäß erfolgt das Ermitteln, ob die Person berechtigt ist, den geplanten Ort anzufahren, (d.h. das Ermitteln der Berechtigung) auf Basis von ortsabhängigen Berechtigungsinformationen, welche die zum Anfahren eines Ortes berechtigten Personen definieren. Im Fall von b) können die Berechtigungsinformationen eine zur Berechtigung erforderliche bzw. zulässige Anzahl an Personen definieren. Im Fall c) können die berechtigten Arten, Klassen oder spezifischen Ladungen ortsabhängig definiert werden.

Es ist in einer Datenbank hinterlegt, welche Personen, Anzahlen oder Ladungen zum Anfahren eines Ortes berechtigt sind. Eine Ermittlung, welche Personen, Anzahlen oder Ladungen zum Anfahren eines Ortes berechtigt sind, kann von einer hierin offenbarten Steuereinrichtung durchgeführt werden. Alternativ kann die Steuereinrichtung die Ortsinformation, die z.B. von einem Navigationssystem des Kraftfahrzeugs erhalten wird, an eine fahrzeugexterne Computereinrichtung übermitteln (z.B. einen Server und insbesondere einen Cloud-Server). Dieser kann dann ermitteln, auslesen oder bestimmen, welche Personen, Anzahlen oder Ladungen zum Anfahren von und insbesondere Anhalten an diesem Ort berechtigt sind. Diese Berechtigungsinformation kann dann an die Steuereinrichtung zurückübermittelt werden.

Zusätzlich kann die fahrzeugexterne Computervorrichtung oder aber eine andere, bevorzugt ebenfalls externe Computervorrichtung unmittelbar ermitteln, ob eine das Kraftfahrzeug nutzende Person einer laut Berechtigungsinformation berechtigten Person entspricht.

Mittels dieser Variante ist es aufwandsarm und bedienerfreundlich möglich zu definieren, welche Orte von welchen Personen, Anzahlen oder Ladungen angefahren werden dürfen. Insbesondere können die Berechtigungsinformationen Klassen von Personen oder Ladungen gemäß einer vorbestimmten Klassifizierung definieren, die zum Anfahren bestimmter Orte berechtigt sind.

Zusätzlich oder alternativ ist es auch möglich, personenbezogene Berechtigungsinformationen vorzugeben bzw. das Ermitteln der Berechtigung auf Basis derartiger personenbezogener Berechtigungsinformationen durchzuführen. Diese personenbezogenen Berechtigungsinformationen können diejenigen Orte definieren, die von einer spezifischen Person (oder auch Klasse von Personen) angefahren werden dürfen. Auf diese Weise können dann bevorzugt klassenspezifisch Orte und/oder Bereiche mit mehreren Orten definiert werden, die von bestimmten Personen angefahren werden dürfen, z.B. sämtliche von Sicherheitskräften anfahrbaren Orte oder sämtliche von der Allgemeinheit anfahrbaren Orte. Auch für Ladungen können vorstehende Varianten vorgesehen sein.

Ein Ermitteln von Berechtigungen kann entsprechend umfassen, dass anhand der personenbezogenen oder ladungsbezogenen Informationen die dazugehörigen personenabhängigen oder ladungsabhängigen Berechtigungsinformationen ermittelt werden und dann ferner ermittelt wird, ob der aktuell anzufahrende Ort einem der Orte entspricht, die durch diese Berechtigungsinformationen definiert bzw. autorisiert sind.

Eine Weiterbildung sieht vor, dass die (wenigstens eine) personenbezogene Information die Person gemäß einer vorbestimmten Klassifizierung klassifiziert. Zusätzlich oder alternativ kann die personenbezogene Information auch die Identität (insbesondere den Namen) oder eine vergleichbare die Identität möglichst eindeutig spezifizierende Information umfassen oder sein. Durch das Vorsehen einer Klassifizierung wird ermöglicht, Klassen und/oder Arten und/oder Gruppen von Personen zu definieren, die beispielsweise kollektiv für das Anfahren bestimmter Orte berechtigt sind oder nicht. Dies ermöglicht das aufwandsarme, flexible und benutzerfreundliche Zuordnen von anfahrbaren Orten zu Personen, die zum Anfahren berechtigt sind (siehe auch obige Beispiele zu Sicherheitskräften und der Allgemeinheit).

Insbesondere kann in diesem Zusammenhang vorgesehen sein, dass die Klassifizierung eine berufliche Klassifizierung ist. Als relevante Berufe kommen dabei Mitarbeiter von Unternehmen, Organisationen oder Behörden in Betracht, insbesondere wenn der Ort einem bestimmten Unternehmen, einer Behörde oder Organisation zuzuordnen ist. Ferner kommen sicherheitsrelevante Berufe, wie z.B. Rettungskräfte, Feuerwehrkräfte, Polizeikräfte oder Militärkräfte in Betracht, insbesondere wenn es sich um Orte handelt, die für die Allgemeinheit (zumindest in Kraftfahrzeugen) nicht zugänglich sind.

Ebenso kann eine Klassifizierung gemäß vorbestimmter Berechtigungsklassen erfolgen. Dann können Personen in vorbestimmten Berechtigungsklassen eingeteilt werden und/oder Orten können entsprechende Berechtigungsklassen zugeordnet werden, um festzulegen, welche Personen für ein Anfahren dieses Ortes autorisiert sind. Die Berechtigungsklassen können dabei insbesondere hinsichtlich sicherheitsrelevanter Kriterien definiert sein, z.B. sodass je nach Sicherheitsanforderungen nur Klassen mit gegebenenfalls entsprechend hoher Sicherheitsklassifizierung für ein Anfahren berechtigt sind.

Ferner kann die Klassifizierung auch eine aufenthaltsortsbezogene Klassifizierung sein. Unter einem Aufenthaltsort kann ein dauerhafter Wohnort, aber auch lediglich ein temporärer Aufenthaltsort verstanden werden (z.B. bei einem vorübergehenden Aufenthalt in Hotels, Büros, dem Arbeitsplatz oder dergleichen). Allgemeiner könnte auch von einer geografischen Klassifizierung gesprochen werden, die sich jedoch auf eine geografische Eigenschaft (also z.B. einen erwarteten Aufenthaltsort) einer dazugehörigen Person oder auch Ladung bezieht. Auf diese Weise kann z.B. lediglich Anwohnern die autonome Einfahrt in ein vorbestimmtes Gebiet bzw. zu vorbestimmten Orten gewährt werden.

Mit anderen Worten können für Personen oder Ladungen zulässige Aufenthaltsorte spezifiziert werden (z.B. Wohnort, Gewerbegebiet, Fabrikgelände oder Arbeitsplatz). Es kann dann ermittelt werden, ob eine Person als an dem geplanten Ort wohnend oder arbeitend oder eine Ladung als an dem geplanten Ort angefordert, benötigt oder zulässig klassifiziert ist und kann dann eine Berechtigung festgestellt werden.

Allgemein kann vorgesehen sein, dass die personenbezogene Information variierbar ist, insbesondere während einer Nutzung des Kraftfahrzeugs durch die Person. Auf diese Weise kann z.B. berücksichtigt werden, dass eine Person sich während der Kraftfahrzeugbenutzung nicht mehr im Dienst befindet bzw. eine Dienstzeit überschreiten kann. Anders ausgedrückt kann die Person während der Nutzung des Kraftfahrzeugs ihre berufliche Klassifikation oder Funktion verlieren, z.B. durch Erreichen eines Arbeitszeitendes. Entsprechend kann die Person dann nicht mehr berechtigt sein, bestimmte Orte anzufahren. Entsprechend kann die personenbezogene Information von einer z.B. berufsbezogenen Information zu einer Information wechseln, welche die Person als der Allgemeinheit zugehörig definiert.

Gemäß einer Weiterbildung ist eine Berechtigung mittels einer fahrzeugexternen Einheit erteilbar (bzw. wird als eine gesonderte Verfahrensmaßnahme erteilt), insbesondere mittels eines Endgeräts, das von einer anderen Person kontrolliert oder, mit anderen Worten, bedient oder gesteuert wird. Bei dem Endgerät kann es sich insbesondere um ein Smartphone oder einen PC handeln. Die Berechtigung kann z.B. in Form einer ortsabhängigen, ladungsabhängigen oder personenabhängigen Berechtigungsinformation der vorstehend erläuterten Art vorliegen bzw. als eine solche definiert oder erteilt werden.

Insbesondere kann vorgesehen sein, dass die Berechtigung auf eine Berechtigungsanfrage hin erteilt wird oder erteilbar ist. Beispielsweise kann dann, wenn ein bestimmter Ort angefahren werden soll, zunächst eine diesem Ort zugeordnete andere Person und/oder Computereinrichtung kontaktiert werden, um von dieser eine etwaige Berechtigung zum Anfahren des Ortes zu erhalten. Eine solche Berechtigungsanfrage kann automatisch ausgelöst werden. Insbesondere kann einem Ort das Erforderlichsein einer entsprechenden Berechtigungsanfrage z.B. mittels einer entsprechenden Nutzereinstellung oder-definition zugeordnet sein. Soll dann dieser Ort angefahren werden, kann automatisch eine Berechtigungsanfrage der vorstehend erläuterten Art ausgelöst werden. Bestandteil der Berechtigungsanfrage kann auch sein, dass die das Kraftfahrzeug nutzende Person oder geladene Ladung mittels der personenbezogenen oder ladungsbezogenen Informationen darin benannt, identifiziert oder klassifiziert wird.

Darauf basierend kann dann der fahrzeugexterne Benutzer oder die fahrzeugexterne Computereinrichtung entscheiden, ob eine Berechtigung erteilt wird.

Diese Ausführungsform ist z.B. für den Lieferverkehr relevant, wenn die das Kraftfahrzeug nutzende Person an insbesondere den Aufenthaltsort einer anderen Person zum Ausliefern einer Bestellung fahren möchte. Beispielsweise wenn es sich bei diesem Ort um einen nicht der Allgemeinheit zugänglichen Ort handelt, kann dann durch eine entsprechende Berechtigungsanfrage und/oder Berechtigungserteilung dennoch ermöglicht werden, dass speziell dieses Kraftfahrzeug bzw. dieser Lieferant sozusagen bedarfsgesteuert dennoch diesen Ort anfahren kann. Auch kann die Berechtigung in Anbetracht einer transportierten Ladung erteilt werden.

Gemäß einer Weiterbildung werden dann, wenn eine Berechtigung nicht vorliegt oder, anders ausgedrückt, ermittelt wird, dass die Person oder das Kraftfahrzeug nicht zum Anfahren des laut Ortsinformationen geplanten Orts berechtigt ist, alternativ anfahrbare Orte ermittelt. Dies können Orte entlang alternativer Routenvorschläge sein, insbesondere aber ein alternativer Zielort. Das Ermitteln kann automatisch ausgeführt werden, z.B. unter Berücksichtigung, dass der ursprünglich geplante Ort nicht mehr angefahren werden kann. Hierfür können Funktionen eines Navigationssystems des Kraftfahrzeugs genutzt werden (insbesondere Routenplanungsfunktionen). Die alternativen Orte bzw. Routen können einer Person z.B. zur finalen Auswahl und/oder Freigabe vorgeschlagen werden. Dies kann mittels einer Anzeigeeinrichtung des Fahrzeugs oder aber eines Endgeräts (z.B. Smartphones) der Person erfolgen.

Wie erwähnt, kann unter dem Anfahren eines Ortes insbesondere das Anfahren eines Zielortes verstanden werden, an dem dann auch ein Aussteigen aus dem, Zusteigen zu dem, Ladungszuladen oder -entladen oder Parken des Kraftfahrzeugs ermöglicht wird. Erfindungsgemäß wird hingegen dann, wenn eine Person oder das Kraftfahrzeug zum Anfahren des Ortes nicht berechtigt ist (z.B. wenn dies die vorstehend erwähnte Ermittlung ergibt), zumindest ein Passieren oder, mit anderen Worten, ein Durchfahren des Ortes ermöglicht. Insbesondere kann in diesem Fall dann kein dauerhaftes Anhalten und insbesondere kein Parken, kein Beladen oder Entladen sowie kein Aussteigen aus oder kein Zusteigen zu dem Kraftfahrzeug ermöglicht werden. Erfindungsgemäß bleibt eine Türverriegelung verschlossen und es kann optional, soweit es die Verkehrssituation erlaubt, eine Fahrgeschwindigkeit mit mehr als 0 km/h aufrechterhalten werden. Anders ausgedrückt können also zumindest Transitberechtigungen oder Transitrecht erteilt werden, sodass ein z.B. sicherheitsrelevantes Gebiet zumindest durchfahren werden kann. Es kann in diesem Fall auch vorgesehen sein, dass ein Öffnen von Fenstern, einem Verdeck, Klappen und/oder eines Dachfensters z.B. durch Aufrechterhalten einer Verriegelung nicht ermöglicht wird.

Allgemein ist hervorzuheben, dass das Anfahren eines Ortes auch mit dem Befahren einer Strecke gleichgesetzt werden kann, die dann vorzugsweise einen entsprechenden geplanten Ort umfasst. Es kann also auch überprüft werden, ob die Person berechtigt ist, eine Strecke, vorzugsweise umfassend einen bestimmten Ort, zu befahren. Liegt diese Strecke oder zumindest ein Streckenabschnitt hiervon (und/oder der wenigstens eine Ort) in einem Gebiet mit Zugangsbeschränkungen, kann dann je nach Berechtigung der Person lediglich ein Durchfahren des Gebiets bzw. Befahren dieser Strecke ohne dauerhaftes Anhalten oder Zusteigen/Aussteigen ermöglicht werden.

Eine weitere Ausführungsform sieht vor, dass bei einer Mehrzahl von das Kraftfahrzeug nutzenden Personen für jede der Personen die Berechtigung ermittelt wird (d.h. die Berechtigung, ob jede der Personen zum Anfahren des geplanten Ortes berechtigt ist). Hierfür können für jede der Personen personenbezogene Informationen erhalten und kann dann eine entsprechende Ermittlung durchgeführt werden. Dies erhöht die Sicherheit oder allgemein die Zuverlässigkeit hinsichtlich eines gewünschten Anfahrens von Orten nur durch berechtigte Personen.

Das Fahrzeug kann auch dazu eingerichtet sein, je nach Berechtigung der Personen oder Ladungen eine Routenplanung vorzunehmen und/oder Orte (und insbesondere alternative Orte) in einer von der Berechtigung abhängigen Reihenfolge anzufahren. Beispielsweise können zunächst Orte angefahren werden, für die sämtliche Personen oder Ladungen berechtigt sind, und können erst anschließend Orte angefahren werden, für die zumindest einige der Personen oder Ladungen (die bevorzugt dann schon an einem vorigen Ort ausgestiegen sind oder entladen wurden) nicht berechtigt wären. Insbesondere kann also zu einem erst späteren Zeitpunkt bzw. nach dem Anfahren von z.B. der Allgemeinheit zugänglichen Orten in eine Sicherheitszone eingefahren werden. Alternativ kann vorgesehen sein, dass für das Anfahren bestimmter Orte nicht berechtigte Personen alternative Orte auswählen und/oder angeben müssen.

Allgemein kann vorgesehen sein, dass Kriterien, die über eine Berechtigung von Personen oder Ladungen zum Anfahren eines Ortes entscheiden, variabel sind. Beispielsweise können diese Kriterien bedarfsweise neu definiert werden. Insbesondere kann vorgesehen sein, personenbezogene, ladungsbezogene oder aber ortsabhängige Berechtigungsinformationen je nach sich ändernden Verhältnissen der realen Welt anzupassen. Beispielsweise können für bestimmte Orte vorübergehend erhöhte Sicherheitsanforderungen gelten, z.B. wenn dort öffentliche Veranstaltungen, Veranstaltungen von politischem Interesse oder allgemeine Menschenversammlungen stattfinden. Für diese Orte können die ortsabhängigen Berechtigungsinformationen geändert werden, vorzugsweise derart, dass nur Personen oder Ladungen mit einer hohen Sicherheits-Klassifizierung oder einer gewünschten beruflichen Funktion zum Anfahren dieser Orte berechtigt sind.

Dies kann auch dazu führen, dass festgestellt wird, dass sich an einem Ort mit einer sich ändernden ortsabhängigen Berechtigungsinformation Kraftfahrzeuge mit Personen oder Ladungen, obwohl sie gemäß der geänderten Berechtigungsinformationen nicht länger für einen Aufenthalt an diesem Ort und insbesondere zum Anfahren dieses Ortes berechtigt sind.

An diese Personen und/oder Fahrzeuge kann dann ein alternativer Routenvorschlag gesendet werden oder aber eine Aufforderung, den Ort z.B. innerhalb eines definierten Zeitraums zu verlassen.

Gemäß einer weiteren Ausführungsform kann auch vorgesehen sein, dass das Ermitteln, ob ein Kraftfahrzeug berechtigt ist, einen geplanten Ort anzufahren, auch unter Berücksichtigung einer Kraftfahrzeuginformation stattfindet. Insbesondere kann berücksichtigt werden, ob die personenbezogene und/oder ladungsbezogene Information mit einer Kraftfahrzeuginformation übereinstimmt und/oder plausibel erscheint.

Beispielsweise kann überprüft werden, ob die personenbezogenen und/oder ladungsbezogene Informationen und die Kraftfahrzeuginformationen auf eine gleichartige berufliche Qualifikation oder Sicherheitsklassifizierung hindeuten. Insbesondere kann überprüft werden, ob das Kraftfahrzeug beruflicher Art ist oder beruflich nutzbar ist (z.B. bei einer Behörde oder allgemein bei Sicherheitskräften registriert ist oder aber bei einem Lieferanten). Ferner kann überprüft werden, ob die personenbezogenen Informationen auf eine gleichartige Funktion und/oder Qualifikation hindeuten oder die Ladung eine solche Qualifikation erfordern würde. Dies erhöht die Zuverlässigkeit, da z.B. nicht plausible Personen-Fahrzeug-Kombinationen (oder Ladungs-Fahrzeug-Kombinationen) erkannt und als Sicherheitsrisiko eingestuft werden können (z.B. ein Regierungsbeamter, der versucht, in einem Lastkraftwagen oder Lieferwagen ein Regierungsgebäude anzufahren, oder ein PKW der Schüttgut transportiert).

Auf gleiche Weise können auch nicht plausible Personen-Ladungs-Kombinationen ermittelt werden (z.B. ein Regierungsbeamter, der Flüssigkeitsbehälter transportiert). Insbesondere kann berücksichtigt werden, ob die personenbezogenen und ladungsbezogenen Informationen übereinstimmen und/oder in Kombinationen plausibel erscheinen.

Die Erfindung betrifft auch eine Steuereinrichtung (oder auch ein Steuergerät) mit den Merkmalen von Anspruch 8.

Die Steuereinrichtung kann einteilig oder mehrteilig sein. Insbesondere kann es sich um eine verteilte Anordnung von Steuergeräten handeln. Allgemein kann die Steuereinrichtung wenigstens einen Prozessor umfassen, z.B. einen Mikroprozessor. Dieser kann dazu eingerichtet sein, Programmanweisungen auszuführen, die z.B. auf einem (digitalen) Speichermedium der Steuereinrichtung hinterlegt sind. Durch Ausführen der Programmanweisungen kann die Steuereinrichtung dazu eingerichtet sein, die vorstehend erwähnten Funktionalitäten bereitzustellen und/oder auszuführen.

Zum Erhalten der personenbezogenen Informationen oder Ladungsinformation kann die Steuereinrichtung in der vorstehend geschilderten Weise Anfragen aussenden und/oder Ermittlungen dieser Informationen durchführen. Beispielsweise kann eine Personen-Informationsermittlungseinheit oder Ladungsinformationsermittlungseinheit in Form eines Softwaremoduls vorgesehen sein, das von der Steuereinrichtung ausführbar ist.

Ebenso können zum Erhalten der Ortsinformationen von der Steuereinrichtung Anfragen an ein Navigationssystem des Kraftfahrzeugs gerichtet werden oder an andere entsprechende Informationen bereithaltende Einheiten. Hierfür kann die Steuereinrichtung allgemein eine Ortsinformationsermittlungseinheit z.B. in Form eines Softwaremoduls umfassen, das von der Steuereinrichtung ausführbar ist.

Zusätzlich oder alternativ kann die Steuereinrichtung auch eine Berechtigungsermittlungseinheit umfassen, z.B. in Form eines Softwaremoduls, das von der Steuereinrichtung ausführbar ist.

Allgemein kann die Steuereinrichtung dazu eingerichtet sein, ein Verfahren gemäß jeglicher der hierin geschilderten Aspekte und Varianten auszuführen. Insbesondere kann die Steuereinrichtung jegliche weitere Einheit (insbesondere jegliches weiteres Softwaremodul) oder jegliches anderweitige Merkmal umfassen, um sämtlich der hierin offenbarten Verfahrensschritte, Verfahrensmaßnahmen oder Verfahrensfunktionen auszuführen und/oder bereitzustellen. Insbesondere können sämtliche Weiterbildungen von und Ausführungen zu den Verfahrensmerkmalen auch auf die gleichlautenden Steuereinrichtungs-Merkmale zutreffen bzw. bei diesen vorgesehen seien.

Ausführungsbeispiele der Erfindung werden im Folgenden anhand der beigefügten schematischen Figuren erläutert.
- Fig. 1: zeigt eine schematische Darstellung zum Erläutern eines erfindungsgemäßen Verfahrens, das mittels einer erfindungsgemäßen Steuereinrichtung ausgeführt wird; und
- Fig. 2: zeigt ein Ablaufschema des erfindungsgemäßen Verfahrens.

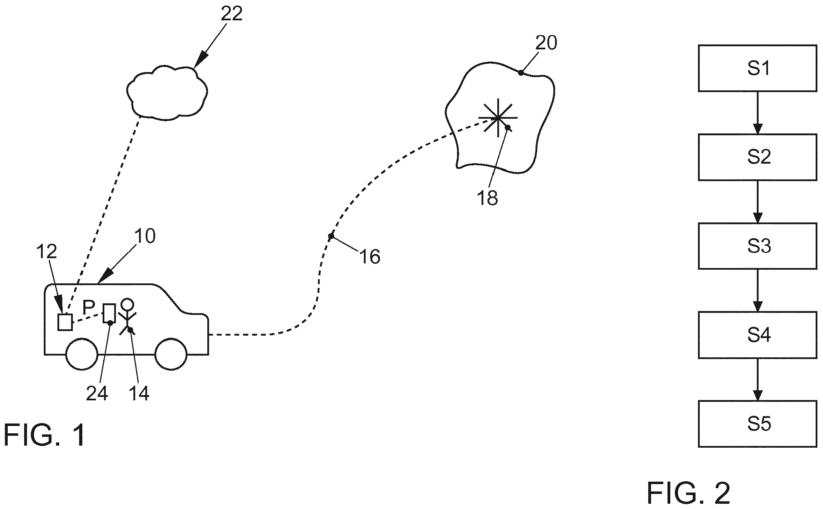

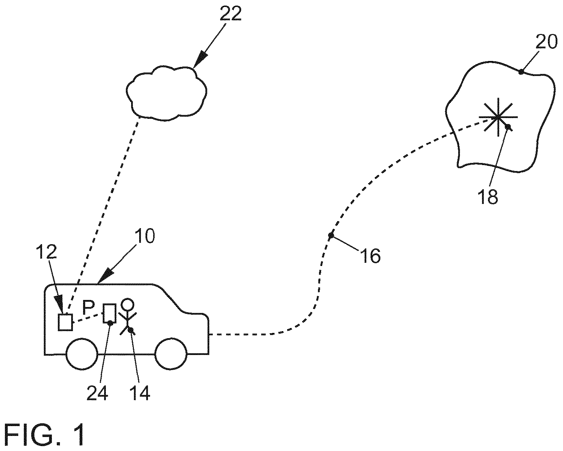

In Fig. 1 ist ein Kraftfahrzeug 10 mit einer Steuereinrichtung 12 gemäß einem Ausführungsbeispiel der Erfindung gezeigt. Die Steuereinrichtung 12 führt ein Verfahren mit sämtlichen nachstehend geschilderten Maßnahmen aus.

Das Kraftfahrzeug 10 ist ein Personenkraftwagen, das von wenigstens einer Person 14 genutzt wird. Das Fahrzeug 10 führt einen autonomen Fahrbetrieb durch oder, anders ausgedrückt, ist selbstfahrend. Die Person 14 fährt also im Hinblick auf den Fahrbetrieb passiv in dem Fahrzeug 10 mit.

Gezeigt ist eine geplante Route 16 des Fahrzeugs 10, die das Fahrzeug 10 zu einem Zielort (Ort) 18 führt. Das Ermitteln von Routen in Abhängigkeit eines geplanten Zielorts 18 ist im Stand der Technik allgemein bekannt und kann von einem nicht gesondert dargestellten Navigationssystem des Fahrzeugs 10, das optional auch von der Steuereinrichtung 12 umfasst oder zumindest hiermit kommunizieren kann, ausgeführt werden.

Der Ort 18 befindet sich in einer Sicherheitszone 20. Die Sicherheitszone 20 kann z.B. in einem Stadtzentrum, nahe eines öffentlichen Gebäudes oder allgemein nahe erwarteter Menschenansammlungen als eine virtuelle geografische Sicherheitszone 20 definiert sein.

Die Steuereinrichtung 12 ermittelt als eine Maßnahme, dass sich der Ort 18 in einer entsprechenden Sicherheitszone 20 befindet. Allgemein kann die Sicherheitszone 20 auch als eine Zone definiert sein, in die nicht beliebige Mitglieder der Allgemeinheit einfahren können oder, anders ausgerückt, für die nicht sämtliche Personen 14 zugangsberechtigt sind.

Gezeigt ist ferner eine fahrzeugexterne Computereinrichtung 22. Hierbei kann es sich z.B. um einen Cloudserver handeln. Die Steuereinrichtung 12 ist dazu eingerichtet, z.B. per Mobilfunk oder mittels einer anderweitigen kabellosen Kommunikationsverbindung mit der externen Computervorrichtung 22 zu kommunizieren.

In der Computereinrichtung 22 sind ortsabhängige Berechtigungsinformationen hinterlegt. Diese definieren, welche Personen 14 zum Anfahren welcher Orte 18 berechtigt sind. Entsprechende Definitionen können variabel festlegbar sein, z.B. durch eine Sicherheitsbehörde. Auch für den beispielhaft gezeigten geplanten anzufahrenden (Ziel-)Ort 18 ist z.B. in Form einer Datenbank hinterlegt, welche Personen 14 für ein Anfahren dieses Ortes 18 berechtigt sind. Allgemein können entsprechende Informationen und insbesondere Berechtigungen für sämtliche Orte 18 innerhalb der Sicherheitszone 20 gelten und hinterlegt sein.

Im gezeigten Beispiel erfolgt das Definieren von Berechtigungen nicht personenspezifisch für einzelne individuelle Personen 14, sondern gemäß einer vorbestimmten Klassifizierung. Genauer gesagt werden die Personen 14 gemäß einer vorbestimmten Klassifizierung klassifiziert, wobei es sich im vorliegenden Fall lediglich beispielhaft um eine berufliche Klassifizierung handelt.

Um festzustellen, welcher Klasse die Person 14 zuzuordnen ist, werden personenbezogene Informationen P von der Steuereinrichtung 12 erhalten und genauer gesagt angefragt und/oder ermittelt. Hierfür wird eine Kommunikationsverbindung zwischen der Steuereinrichtung 12 und einem von der Person 14 betätigten Endgerät 24 hergestellt (vorzugsweise eine kabellose Kommunikationsverbindung, z.B. per Mobilfunk). Bei dem Endgerät 24 kann es sich z.B. um ein Smartphone handeln. Dieses kann direkt eine Klasse der Person 14 gemäß einer vorbestimmten Klassifizierung angeben, z.B. ob es sich um das Mitglied einer Sicherheitsbehörde handelt. Es ist aber auch möglich, dass eine Identitätsinformation zu der spezifischen individuellen Person 14 übermittelt wird und dann die Steuereinrichtung 12 z.B. auf den Server 22 zugreift, um zu ermitteln, welcher Klasse diese individuelle Person 14 zuzuordnen ist.

Insgesamt erhält die Steuereinrichtung 12 somit von einem Navigationssystem des Fahrzeugs 10 Ortsinformationen zu dem geplanten Zielort 18. Darauf basierend ermittelt sie optional, ob es sich um einen Ort 18 mit Zugangsbeschränkung handelt. Weiter erhält die Steuereinrichtung 12 die personenbezogenen Informationen P, anhand derer die Person 14 klassifiziert werden kann und/oder unmittelbar klassifiziert wird. Auf diese Weise kann die Steuereinrichtung 12 ermitteln, ob die Person 14 einer Klasse zugehört oder, mit anderen Worten, eine Berechtigungsstufe besitzt, die es ihr erlaubt, den gegebenenfalls zugangsbeschränkten Zielort 18 anzufahren.

Ist dies der Fall, ermöglicht die Steuereinrichtung 12 weiterhin den autonomen Fahrbetrieb des Fahrzeugs 10 zum Ausführen des Orts 18. Liegt hingegen keine entsprechende Berechtigung vor, können z.B. alternative Routenvorschläge ausgegeben werden und/oder kann das Fahrzeug 10 automatisch angehalten werden, z.B. am Rand der Sicherheitszone 20.

In Fig. 2 wird der vorstehend allgemein geschilderte Verfahrensablauf noch einmal anhand eines Ablaufschemas dargestellt. Bei einer Maßnahme S1 werden Informationen zum geplanten anzufahrenden Ort 18 erhalten.

Als weitere Maßnahme S2 wird ermittelt, ob dieser Ort 18 einer Zugangsbeschränkung unterliegt und im gezeigten Beispiel innerhalb einer Sicherheitszone 20 liegt. Dies ist vorliegend der Fall. Wäre dies nicht der Fall, könnten weitere Ermittlungsschritte unterbleiben, da der Ort 18 der Allgemeinheit zugänglich ist. Das Fahrzeug 10 könnte dann unmittelbar seinen autonomen Fahrbetrieb fortsetzen und den Ort 18 autonom anfahren.

Da aber im vorliegenden Beispiel der Ort 18 einer Zugangsbeschränkung unterliegt, wird mit der Maßnahme S3 fortgesetzt und werden dort die vorstehend geschilderten ortsabhängigen Berechtigungsinformationen erhalten.

Bei der Maßnahme S4, die prinzipiell auch zu einem anderen Zeitpunkt und insbesondere parallel zu einem der vorangehenden Maßnahmen S1-S3 ausgeführt werden könnte, werden dann die personenbezogenen Informationen P erhalten. Mit der Maßnahme S5 wird schließlich anhand dieser insgesamt erhaltenen Informationen ermittelt, ob die Person 14 berechtigt ist, den Ort 18 anzufahren oder nicht. Liegt die Berechtigung vor, wird der autonome Fahrbetrieb des Fahrzeugs 10 fortgesetzt. Liegt diese Berechtigung nicht vor, kann das Fahrzeug 10 z.B. umgeleitet oder angehalten werden. Gemäß der in den unabhängigen Ansprüchen definierten Erfindung ist jedoch vorgesehen, dass zumindest ein Durchfahren des Ortes ermöglicht wird, wobei die Steuereinrichtung dann veranlasst, dass eine Türverriegelung des Kraftfahrzeugs verschlossen bleibt.

Die geschilderten Beispiele richten sich vor allem auf Varianten a) des Ermittelns von Personenberechtigungen. Im allgemeinen Teil sind auch Varianten erläutert, die das Ermitteln von Ladungsinformationen (hierin auch als ladungsbezogene Informationen bezeichnet) betreffen, bspw. im obigen Schritt S4. Diese können zusätzlich herangezogen werden, um zu ermitteln, ob eine Person 14 bzw. ein Kraftfahrzeug 10 zum Anfahren eines Ortes 18 berechtigt ist. Sie können z.B. mittels fahrzeug montierter Kameras ermittelt werden.

Weiter können Berechtigung auch in Abhängigkeit davon ermittelt werden, mit wie vielen Personen 14 das Fahrzeug 10 besetzt ist und insbesondere, ob sich dort wenigstens eine Person 14 befindet. Auch dies kann im Schritt S4 ermittelt werden, wobei im Schritt S2 dann eine erforderliche oder zulässige Anzahl an Personen 14 bestimmt werden kann, falls diese nicht standardgemäß vorgeben ist (z.B. mindestens eine Person 14).

### Bezugszeichenliste

- 10: Kraftfahrzeug
- 12: Steuereinrichtung
- 14: Person
- 16: Route
- 18: (Ziel-)Ort
- 20: Sicherheitszone
- 22: fahrzeugexterne Computereinrichtung (Cloud-Server)
- 24: Endgerät
- P: personenbezogene Information

## Patentansprüche

1. Verfahren zum Betreiben eines autonom betreibbaren Kraftfahrzeugs (10), das von einem Steuergerät (12) des Kraftfahrzeugs (10) ausgeführt wird, mit:
- Erhalten einer Ortsinformation betreffend einen geplanten Ort (18) des Kraftfahrzeugs (10);
- Ermitteln, ob sich der Ort (18) in einer Sicherheitszone (20) befindet, zu der nicht beliebige Personen (14) zugangsberechtigt sind;
- Ermitteln, ob das Kraftfahrzeug (10) berechtigt ist, den laut Ortsinformation geplanten Ort (18) anzufahren, anhand von wenigstens einer personenbezogenen Information (P) zu wenigstens einer das Kraftfahrzeug (10) nutzenden Person (14);
wobei das Ermitteln der Berechtigung ferner auf Basis von in einer Datenbank hinterlegten ortsabhängigen Berechtigungsinformationen erfolgt, welche die zum Anfahren eines Ortes (18) berechtigten Personen (14) definieren, und dann, wenn die Steuereinrichtung (12) ermittelt, dass eine Person (14) zum Anfahren des Ortes (18) nicht berechtigt ist, zumindest ein Durchfahren des Ortes (18) ermöglicht wird, wobei die Steuereinrichtung (12) dann veranlasst, dass eine Türverriegelung des Kraftfahrzeugs (10) verschlossen bleibt.

2. Verfahren nach Anspruch 1, **dadurch gekennzeichnet, dass** die personenbezogene Information (P) die Person (14) gemäß einer vorbestimmten Klassifizierung klassifiziert.

3. Verfahren nach Anspruch 2, **dadurch gekennzeichnet, dass** die Klassifizierung:
- eine berufliche Klassifizierung ist;
- eine aufenthaltsortsbezogene Klassifizierung ist;
- eine Klassifizierung gemäß vorbestimmter Berechtigungsklassen ist.

4. Verfahren nach einem der vorangehenden Ansprüche, **dadurch gekennzeichnet, dass** die personenbezogene Information (P) variierbar ist, insbesondere während einer Nutzung des Kraftfahrzeugs (10) durch die Person (14).

5. Verfahren nach einem der vorangehenden Ansprüche, **dadurch gekennzeichnet, dass** eine Berechtigung mittels einer fahrzeugexternen Einheit (22) erteilbar ist, insbesondere mittels eines Endgeräts (24), das von einer anderen Person (14) kontrolliert wird.

6. Verfahren nach einem der vorangehenden Ansprüche, **dadurch gekennzeichnet, dass** dann, wenn eine Berechtigung nicht vorliegt, alternativ anfahrbare Orte (18) ermittelt werden.

7. Verfahren nach einem der vorangehenden Ansprüche, **dadurch gekennzeichnet, dass** bei einer Mehrzahl von das Kraftfahrzeug nutzenden Personen (14) für jede der Personen (14) die Berechtigung ermittelt wird.

8. Steuereinrichtung (12) zum Betreiben eines autonom betreibbaren Kraftfahrzeugs (10), die dazu eingerichtet ist:
- wenigstens eine Ortsinformation betreffend einen geplanten Ort (18) des Kraftfahrzeugs (10) zu erhalten; und
- zu ermitteln, ob sich der Ort (18) in einer Sicherheitszone (20) befindet, zu der nicht beliebige Personen (14) zugangsberechtigt sind;
- zu ermitteln, ob das Kraftfahrzeug (10) berechtigt ist, den laut Ortsinformation geplanten Ort (18) anzufahren, anhand von wenigstens einer personenbezogenen Information (P) zu wenigstens einer das Kraftfahrzeug (10) nutzenden Person (14);
wobei das Ermitteln der Berechtigung ferner auf Basis von in einer Datenbank hinterlegten ortsabhängigen Berechtigungsinformationen erfolgt, welche die zum Anfahren eines Ortes (18) berechtigten Personen (14) definieren, und dann, wenn die Steuereinrichtung (12) ermittelt, dass eine Person (14) zum Anfahren des Ortes (18) nicht berechtigt ist, zumindest ein Durchfahren des Ortes (18) ermöglicht wird, wobei die Steuereinrichtung (12) dann eingerichtet ist, zu veranlassen, dass eine Türverriegelung verschlossen bleibt.

## Claims

1. Method for operating an autonomously operable motor vehicle (10) which is performed by a control unit (12) of the motor vehicle (10), comprising:
- obtaining a location information item relating to a planned location (18) of the motor vehicle (10);
- ascertaining whether the location (18) is situated in a security zone (20) for which not any persons (14) have access authorization;
- ascertaining whether the motor vehicle (10) is authorized to travel to the location (18) planned according to the location information item on the basis of at least one person-related information item (P) relating to at least one person (14) using the motor vehicle (10);
wherein the ascertainment of the authorization is further performed on the basis of location-dependent authorization information items which are stored in a database and define the persons (14) authorized to travel to a location (18), and, if the control device (12) ascertains that a person (14) is not authorized to travel to the location (18), at least travel through the location (18) is allowed, wherein the control device (12) then arranges for a door locking system of the motor vehicle (10) to remain locked.

2. Method according to Claim 1, **characterized in that** the person-related information item (P) classifies the person (14) in accordance with a predetermined classification.

3. Method according to Claim 2, **characterized in that** the classification:
- is a profession-related classification;
- is a classification relating to place of residence;
- is a classification in accordance with predetermined authorization classes.

4. Method according to any of the preceding claims, **characterized in that** the person-related information item (P) is variable, in particular during use of the motor vehicle (10) by the person (14).

5. Method according to any of the preceding claims, **characterized in that** an authorization can be granted by means of a vehicle-external unit (22), in particular by means of a terminal (24) which is controlled by another person (14).

6. Method according to any of the preceding claims, **characterized in that**, if an authorization is not present, locations (18) which can alternatively be travelled to are ascertained.

7. Method according to any of the preceding claims, **characterized in that**, in the case of a multiplicity of persons (14) using the motor vehicle, the authorization is ascertained for each of the persons (14).

8. Control device (12) for operating an autonomously operable motor vehicle (10), which is configured:
- to obtain at least one location information item relating to a planned location (18) of the motor vehicle (10);
- to ascertain whether the location (18) is situated in a security zone (20) for which not any persons (14) have access authorization; and
- to ascertain whether the motor vehicle (10) is authorized to travel to the location (18) planned according to the location information item on the basis of at least one person-related information item (P) relating to at least one person (14) using the motor vehicle (10);
wherein the ascertainment of the authorization is further performed on the basis of location-dependent authorization information items which are stored in a database and define the persons (14) authorized to travel to a location (18), and, if the control device (12) ascertains that a person (14) is not authorized to travel to the location (18), at least travel through the location (18) is allowed, wherein the control device (12) is then configured to arrange for a door locking system to remain locked.

## Revendications

1. Procédé permettant de faire fonctionner un véhicule automobile (10) pouvant fonctionner de manière autonome, qui est exécuté par un appareil de commande (12) du véhicule automobile (10), comprenant les étapes consistant à :
- obtenir une information de lieu concernant un lieu prévu (18) du véhicule automobile (10) ;
- déterminer si le lieu (18) se trouve dans une zone de sécurité (20) à laquelle toutes les personnes (14) n'ont pas accès ;
- déterminer si le véhicule automobile (10) est autorisé à s'approcher du lieu prévu (18) selon l'information de lieu, à l'aide d'au moins une information personnelle (P) concernant au moins une personne (14) utilisant le véhicule automobile (10) ;
dans lequel la détermination de l'autorisation est effectuée en outre sur la base d'informations d'autorisation dépendant du lieu, stockées dans une base de données, qui définissent les personnes (14) autorisées à s'approcher d'un lieu (18), et ensuite, si le dispositif de commande (12) détermine qu'une personne (14) n'est pas autorisée à s'approcher du lieu (18), au moins un passage par le lieu (18) est rendu possible, dans lequel le dispositif de commande (12) fait qu'un verrouillage des portes du véhicule automobile (10) reste fermé.

2. Procédé selon la revendication 1, **caractérisé en ce que** l'information personnelle (P) classifie la personne (14) selon une classification prédéterminée.

3. Procédé selon la revendication 2, **caractérisé en ce que** la classification est :
- une classification professionnelle ;
- une classification liée au lieu de séjour ;
- une classification selon des classes d'autorisation prédéterminées.

4. Procédé selon l'une quelconque des revendications précédentes, **caractérisé en ce que** l'information personnelle (P) est variable, en particulier pendant une utilisation du véhicule automobile (10) par la personne (14).

5. Procédé selon l'une quelconque des revendications précédentes, **caractérisé en ce qu'**une autorisation peut être accordée au moyen d'une unité (22) externe au véhicule, en particulier au moyen d'un terminal (24) qui est contrôlé par une autre personne (14).

6. Procédé selon l'une quelconque des revendications précédentes, **caractérisé en ce que** s'il n'existe aucune autorisation, des lieux (18) accessibles en variante sont déterminés.

7. Procédé selon l'une quelconque des revendications précédentes, **caractérisé en ce que** dans le cas d'une pluralité de personnes (14) utilisant le véhicule automobile, l'autorisation est déterminée pour chacune des personnes (14).

8. Dispositif de commande (12) permettant de faire fonctionner un véhicule automobile (10) pouvant fonctionner de manière autonome, qui est conçu pour :
- obtenir au moins une information de lieu concernant un lieu prévu (18) du véhicule automobile (10) ; et
- déterminer si le lieu (18) se trouve dans une zone de sécurité (20) à laquelle toutes les personnes (14) n'ont pas accès ;
- déterminer si le véhicule automobile (10) est autorisé à s'approcher du lieu prévu (18) selon l'information de lieu, à l'aide d'au moins une information personnelle (P) concernant au moins une personne (14) utilisant le véhicule automobile (10) ;
dans lequel la détermination de l'autorisation est effectuée en outre sur la base d'informations d'autorisation dépendant du lieu, stockées dans une base de données, qui définissent les personnes (14) autorisées à s'approcher d'un lieu (18), et ensuite, si le dispositif de commande (12) détermine qu'une personne (14) n'est pas autorisée à s'approcher du lieu (18), au moins un passage par le lieu (18) est rendu possible, dans lequel le dispositif de commande (12) est conçu pour faire qu'un verrouillage des portes reste fermé.
